(19) Europäisches Patentamt
European Patent Office
Office européen des brevets

(11) **EP 2 092 488 B1**

(12) **EUROPEAN PATENT SPECIFICATION**

(45) Date of publication and mention
of the grant of the patent:
**22.09.2010 Bulletin 2010/38**

(51) Int Cl.:
*G06T 15/20* (2006.01)    *G06T 9/00* (2006.01)
*H04N 7/26* (2006.01)    *H04N 7/46* (2006.01)

(21) Application number: **07848599.2**

(22) Date of filing: **18.12.2007**

(86) International application number:
**PCT/GB2007/004862**

(87) International publication number:
**WO 2008/075027 (26.06.2008 Gazette 2008/26)**

(54) **IMAGE COMPRESSION AND/OR DECOMPRESSION**

KOMPRIMIERUNG UND/ODER DEKOMPRIMIERUNG VON BILDERN

COMPRESSION ET/OU DÉCOMPRESSION D'IMAGE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **20.12.2006 GB 0625401**

(43) Date of publication of application:
**26.08.2009 Bulletin 2009/35**

(73) Proprietor: **Sony Computer Entertainment Europe
Limited
London W1F 7LP (GB)**

(72) Inventor: **BROWN, Simon James
London W1F 7LP (GB)**

(74) Representative: **Turner, James Arthur
D Young & Co LLP
120 Holborn
London EC1N 2DY (GB)**

(56) References cited:
**WO-A-2004/114672    WO-A-2005/081532
GB-A- 2 348 334    US-A1- 2004 252 900**

- **CHEE Y-K: "SURVEY OF PROGRESSIVE IMAGE
  TRANSMISSION METHODS" INTERNATIONAL
  JOURNAL OF IMAGING SYSTEMS AND
  TECHNOLOGY, WILEY AND SONS, NEW YORK,
  US, vol. 10, no. 1, 1 January 1999 (1999-01-01),
  pages 3-19, XP000805935 ISSN: 0899-9457**
- **BURT P J ET AL: "THE LAPLACIAN PYRAMID AS
  A COMPACT IMAGE CODE" IEEE
  TRANSACTIONS ON COMMUNICATIONS, IEEE
  SERVICE CENTER, PISCATAWAY, NJ, US, vol.
  COM 31, no. 4, 1 April 1983 (1983-04-01), pages
  532-540, XP000570701 ISSN: 0090-6778**
- **BEERS A C ET AL: "RENDERING FROM
  COMPRESSED TEXTURES" COMPUTER
  GRAPHICS PROCEEDINGS 1996 (SIGGRAPH).
  NEW ORLEANS, AUG. 4 - 9, 1996; [COMPUTER
  GRAPHICS PROCEEDINGS (SIGGRAPH)], NEW
  YORK, NY : ACM, US, 4 August 1996 (1996-08-04),
  pages 373-378, XP000682753**

**Description**

This invention relates to image compression and/or decompression.

In three dimensional (3D) computer graphics (CG) systems, various techniques are used to determine the shape of a 3D object to be displayed as a 2D view on a display screen. An arrangement often referred to as a "shader" then determines the surface appearance of the object. This will generally involve applying a surface "texture" to the drawn object, as well as taking into consideration the reflectivity of the object and also the location of light sources (in the virtual environment) relative to that object.

Applying a surface texture involves projecting a previously prepared and stored image called a "texture map" (representing the desired surface appearance of the object) onto a 3D shape. This is an established technique and will not be described here in detail, except in relation to its general requirement for a set of stored texture maps for projection onto graphically generated 3D shapes. Texture maps are just image data; the images happened to represent surface patterning to be applied to a CG object, but fundamentally they simply represent image data. In, for example, a computer game system, there is often a need for very many of these texture maps, which means in practical terms that they need to be stored (for example on a computer game disk) in compressed form.

Many CG systems, particularly hardware-accelerated 3D CG devices in personal computers or in games machines, operate in real time, which is to say that they generate a new image for display once per display (frame) period. In order to achieve this, they require rapid access to stored texture maps and so require compression / decompression techniques which allow a relatively straightforward and rapid decompression of the stored texture maps.

Some image compression techniques are specifically designed to provide this feature, i.e. that the decompression process requires relatively little processing and relatively few memory accesses. An example is the family of S3 Texture Compression techniques, often referred to as DXTn (where n is 1-5), developed by S3 Graphics Ltd and described in references 1 and 2 below.

DXT1 in a basic form provides a fixed 6:1 compression of 24 bit RGB (red-green-blue) colour data so that a 4 x 4 block of pixels (384 bits) is compressed to a 64 bit data quantity. Each pixel block is compressed by picking a "start" and an "end" colour at 565 precision (that is, 5 bits for red, 6 for green and 5 for blue) and considering up to two full-precision intermediate colours which may be defined as being evenly distributed (on a straight line in RGB colour space) between the start and end colours. Accordingly, because the intermediate colours may be derived from the start and end colours, the intermediate colours do not need to be explicitly coded as part of the compressed data. Each pixel in the 4 x 4 pixel block is then encoded with a 2-bit index as a selection of a nearest one of these 4 colours. So the total number of bits used to encode the 4 x 4 pixel block is (16 pixels *2 bits per pixel) + (2 reference colours * (5+6+5) bits per reference colour) = 64 bits.

When the block of pixels is decompressed, it is necessary just to detect the start and end colours, to interpolate the two intermediate colours evenly distributed in colour space between the start and end colours, and then use those four colours in a look-up table with the 2 bit index provided for each pixel. In this way, the more processor-intensive aspects of the compression / decompression processing (e.g. choice of the start and end colours) can be handled at the compression side, leaving the decompression as a relatively straightforward processing operation.

Other variants of DXT1, and other members of the DXTn family of techniques, use a similar approach and can also handle so-called alpha channel (transparency) information relating to the pixel block. For ease of explanation, DXT1 will be discussed here by way of example, but it will be appreciated that the techniques to be described are applicable both to the remaining DXT techniques and also to other compression techniques falling within the scope of the appended claims.

The DXT1 compression system described above provides an efficient way of compressing a single texture map, at a particular image size, for use in a CG system. However, the 3D object onto which the texture map is to be projected may vary in size - at a simple level, in dependence on how big an object is being represented and how far that object is displaced, in the virtual environment, from the virtual viewpoint. If only a single texture map were stored, the image size of the texture map may well not match the size required to map correctly onto the 3D object. But if a texture map were stored for each possible object scale, the storage requirements would be impractically large. So a convenient solution is that a few texture maps at a selection of different scales are stored, and for a particular object, a texture map (or rather, the relevant parts of a texture map) at the required scale is interpolated from the one or two stored maps nearest in scale to the required scale. Generally the aim will be to have a wide enough range of stored maps that most required scales will fall between a pair of stored map scales. To handle situations where the displayed object is moving relative to the virtual viewpoint, so that a differently scaled texture map may be required at each frame, this interpolation process can be carried out in real time.

The use of multiple scales of texture maps is sometimes referred to as "MIP mapping" (MIP being an acronym of the Latin phrase *multum in parvo,* meaning "much in a small space"). The term "MIP map" is generally used to refer to a set of texture maps at different scales. Often the scales form a geometric series, so that (for example) each scale is one quarter of the size (50% in each dimension) of the next higher scale. As an example, if a texture map has a basic size of 256 x 256 pixels, then the associated MIP map might contain a further eight versions of that texture map, at image sizes 128 x 128, 64 x 64, 32 x 32, 16 x 16, 8 x 8, 4 x 4, 2 x 2 and 1x 1 pixels. The total storage requirement of the MIP map is very close to 1⅓ times the storage space of the basic (256 x 256) texture map.

The shader uses the MIP map to produce texture information at a required scale, generally by interpolating between the two closest scales in the MIP map. So, for example, if the display size of an object means that a texture map at a scale of 40 x 40 pixels would be required, the shader would interpolate required parts of the texture from the 64 x 64 and 32 x 32 images in the MIP map.

The set of scales listed above, in the 0.25 geometric series, is of course just one example of the use of MIP maps.

The technique is considered to work well on texture maps containing significant high spatial frequency information, but not so well on texture maps having smooth gradients (representing relatively low spatial frequency detail). An example of a texture map having such low frequency detail is a texture map representing the illumination of an object. With low spatial frequency texture maps, compression artefacts, sometimes representing discontinuities caused by the need to select the start and end colours in DXT compression on a block-by-block basis, can be visible.

Various other sets of scales, sometimes involving many more images in the MIP map, have been proposed, in order to try to improve the rendered appearance of displayed objects. Another possibility is to use a different colour space than RGB for the compression system. However, these attempts are found to suffer either from greatly increased storage requirements or undesirable additional processing overhead at the decompression stage.

Prior art references include Chee Y-K: "Survey of Progressive Image Transmission Methods", International Journal of Imaging Systems and Technology, Wiley and Sons, vol 10 no. 1; and GB-A-2 348 334.

This invention provides a method of image compression according to claim 1. This invention also provides a method of image decompression according to claim 6.

The selected image versions may be, for example, such that the resulting difference data represents resolutions spanning the required output resolution.

The invention provides an image data compression / decompression technique which is particularly (though not exclusively) suited to real time use in CG applications and which can provide an improved output image quality for little increase in memory or processing overhead. In particular, for similar storage and processing requirements, visible noise can be reduced (by the use of this technique compared to previous techniques) in situations where low spatial frequency image information such as smooth lighting gradients is encoded.

Various other aspects and features of the invention are defined in the appended claims.

Embodiments of the invention will now be described, by way of example only, with reference to the accompanying drawings in which:

Figure 1 is a schematic diagram of a data processing apparatus;
Figure 2 is a schematic diagram of a graphics card;
Figure 3 schematically illustrates a MIP map;
Figure 4 schematically illustrates the generation of a MIP map according to embodiments of the present invention; and
Figure 5 schematically illustrates the interpolation of a required texture map value from a MIP map generated in accordance with Figure 4.

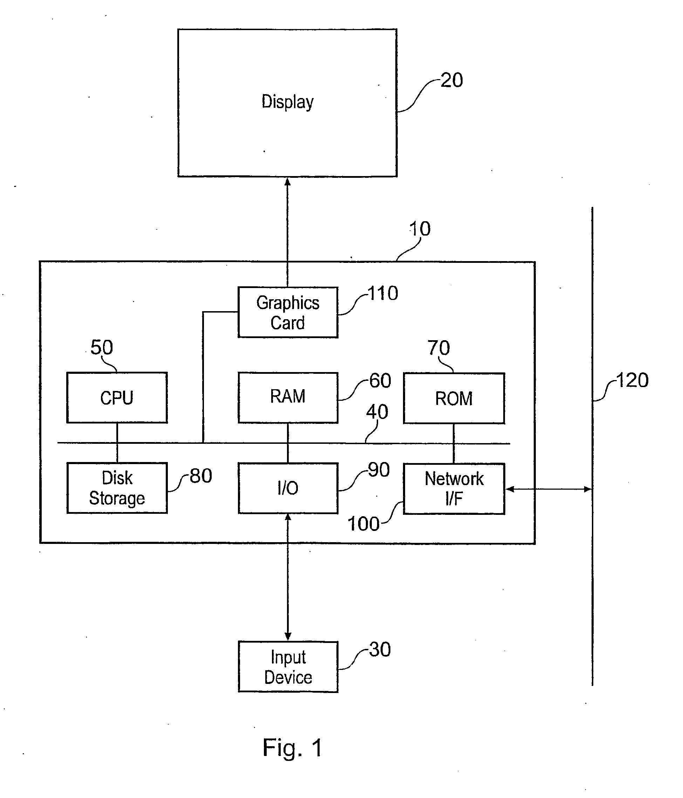

Referring now to Figure 1, a data processing apparatus comprises a system unit 10, a display 20 and an input device 30 such as a mouse, keyboard, game controller and the like, or combinations of these. The display and input device are peripherals to the data processing apparatus, which may of course be marketed without those items.

The data processing apparatus may be, for example, a personal computer, a computer games machine such as a Sony ® PlayStation 3 ® home entertainment machine or a handheld machine such as a Sony ® PlayStation Portable ® entertainment machine.

The system unit 10 comprises a number of items interconnected by a bus structure 40: a central processing unit (CPU) 50; random access memory (RAM) 60, read only memory (ROM) 70, removable and/or fixed disk storage (such as optical disk storage) 80; an input/output (I/O) interface 90 for interfacing with peripherals such as the input device 30; a wired and/or wireless network interface 100 for interfacing with a network and/or internet connection 120; and a graphics card 110.

Two modes of operation of the data processing apparatus are described below: these are the preparation of compressed texture maps for use in later generation of graphical images, and the decompression of compressed texture maps for applying a texture to a graphical object. In general terms, these can be carried out by the same data processing apparatus, though it will be appreciated that it is perhaps more likely that the first of these processes would be carried out by a powerful non-portable system such as a so-called developer's kit or a powerful personal computer, whereas the second of the processes would be carried out by a consumer device such as one of the entertainment machines mentioned above. For the sake of the following description, it will be assumed that the apparatus shown in Figure 1 is representative of apparatus capable of carrying out either process.

In operation, computer program code is read from the disk storage 80, the ROM 70 and/or via the network connection 120 and is loaded into the RAM 60 for execution by the CPU 50, possibly in response to signals received from the input device 30. The CPU 50 generates data outputs which are passed to the graphics card 110.

The graphics card 110 acts on data received from the CPU 50 to prepare or "render" an image to be displayed on the display 20. A more detailed description of the graphics card 110 will be given below. In general terms, the graphics card (which need not of course be card-shaped or even removable in terms of its connection to the rest of the apparatus) comprises a microprocessor and associated memory and other hardware which are dedicated to handling processing tasks specific to the rendering of output images in an efficient way.

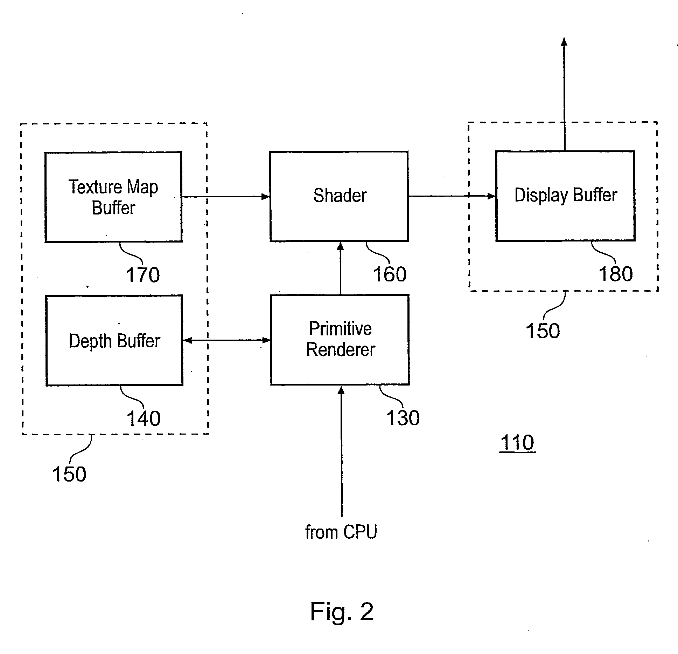

Figure 2 is a schematic diagram of the graphics card 110. It will be appreciated that graphics cards can be very powerful computational devices in their own right, and so Figure 2 is merely an overview of that part of the functionality of a graphics card which is relevant to the present description, rather than forming the basis of a comprehensive description of CG techniques. The graphics card in the PlayStation 3 ® entertainment machine is based upon the NVIDIA ® 7800™ graphics card.

So, as an overview, the graphics card 110 receives data from the CPU 50, from which data it generates an output image to be stored in a display buffer 180. A primitive renderer 130 generates small image portions, known as primitives, from which the output image is built up. Each primitive might represent, for example, a small polygon forming part of an object or image background in the output image. A "depth" or "z" value is associated with each pixel of each primitive, to show its depth in the final image relative to other rendered primitives. The depth values are stored in a depth buffer 140. Similarly, a transparency or "$\alpha$" value is associated with each pixel to define a degree of transparency. In this way, the final image can be built up so that background pixels are hidden behind non-transparent foreground pixels; whereas background pixels may be wholly or partly seen if a foreground pixel at the same display position is completely or partly transparent.

A shader 160 applies surface textures to some or all of the rendered primitives using texture maps stored in a texture map buffer 170. These texture maps may have been retrieved from (for example) the disk storage 80, the ROM 70, the RAM 60 or via the network connection 120, and are stored locally in the texture map buffer 170 for ease and speed of access. It will be appreciated that the shader could work directly from the original source of the texture map data, i.e. without the need for local storage, but such an arrangement would almost certainly be considerably slower than caching the texture map data in local storage. Indeed, the depth buffer 140, the texture map buffer 170 and the display buffer 180 - along with other storage requirements of the graphics card not shown in Figure 2 - form part of the graphics card's local storage 150 which is provided in or very close to the graphics card for speed of operation.

The shader takes into account the nature of the object or surface to be rendered and other factors such as its reflectivity and the nature and position of any lighting in the virtual environment, to apply a surface finish or appearance to be applied to that object. Many different shader techniques have been proposed and developed, such as vertex shading, pixel shading, geometrical shading and the like. These are all known in the art and will not be described in detail here, as the present embodiments are relevant to the generation of the texture map data which is applied by the shader, rather than to the particular technique by which that texture map data is applied.

Shaders are usually implemented using a shading language, which is a specifically designed programming language having features which are particularly relevant to the functionality of a shader. Some example functions, written in a shader language, will be given below. The graphics card used in the Sony ® PlayStation 3 ® entertainment machine is reported to be capable of about 75 billion shader operations per second.

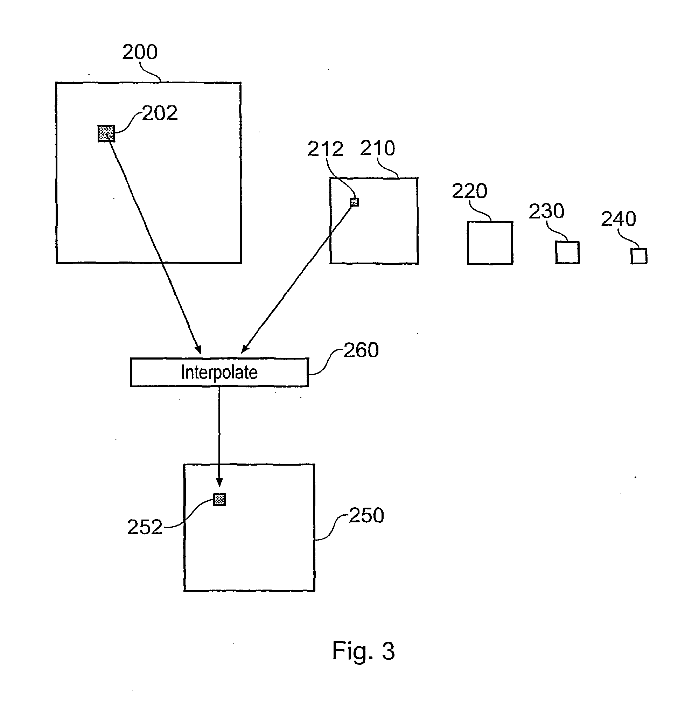

Figure 3 is a schematic diagram showing a previously proposed MIP map.

The term "MIP map" is used here to refer to a set of texture maps at different scales. In the present example, the scales form a geometric (i.e. logarithmic) series or set, so that each scale (resolution) is one quarter of the size (50% in each dimension) of the next higher scale. In particular, a texture map 200 has a basic size of 256 x 256 pixels. The MIP map contains up to a further eight versions of that texture map, at image sizes 128 x 128, 64 x 64, 32 x 32, 16 x 16, 8 x 8, 4 x 4, 2 x 2 and 1 x 1 pixels. In Figure 3, for clarity of the drawing, only the first five scales are shown, namely 256 x 256 (the texture map 200); 128 x 128 (a texture map 210); 64 x 64 (a texture map 220); 32 x 32 (a texture map 230) and 16 x 16 (a texture map 240). With all nine versions, the total storage requirement of the MIP map is very close to 1⅓ times the storage space of the basic (256 x 256) texture map 200.

The different texture map versions in the MIP map have all been compressed using (in this example) DXT1 compression.

The shader uses the MIP map to produce texture information at a required scale, generally by interpolating between the two closest scales in the MIP map. Various interpolation methods for this purpose have been proposed, and the particular interpolation technique is not important to the present embodiment. Interpolation at this stage benefits if anti-aliasing processing was carried out when the texture map versions at different scales were first generated.

The required scale of the texture map depends on the display size of the object being rendered, which in turn depends on a base size and also the distance at which the object is to be displayed (in the virtual environment) from the virtual viewpoint. Known techniques are used to establish the required scale of the texture map to be interpolated.

Rather than interpolating an entire texture map at the required scale, generally only those portions required for the object's display are interpolated. This selection of portions for interpolation can take place at a pixel-by-pixel level.

So, for example, if the display size of an object means that a texture map 250 at a scale of (say) 160 x 160 pixels would be required, the shader interpolates required parts of the texture from the 256 x 256 version 200 and the 128 x 128 pixel version 210 in the MIP map. Because DXT1 compression is local to particular blocks of the compressed image (i.e. the decompression of a block does not require any other blocks to be decompressed), it is necessary only to decompress those parts of the versions which are relevant to the interpolation process. An example is shown in Figure 3, where a portion 252 (defined by intra-map coordinates (u,v) derived in a conventional way by the shader) is interpolated by an interpolation process 260 running on the shader 160 from decompressed portions 202 and 212 of the respective image versions in the MIP map.

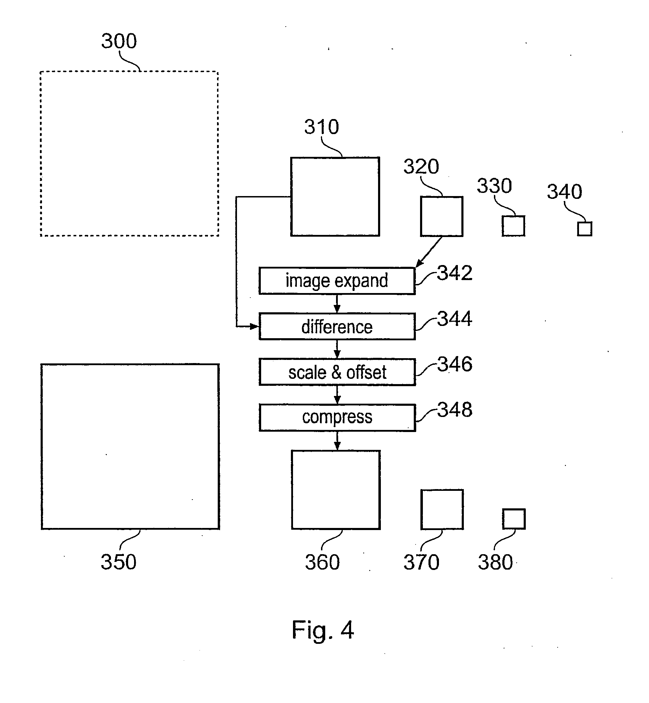

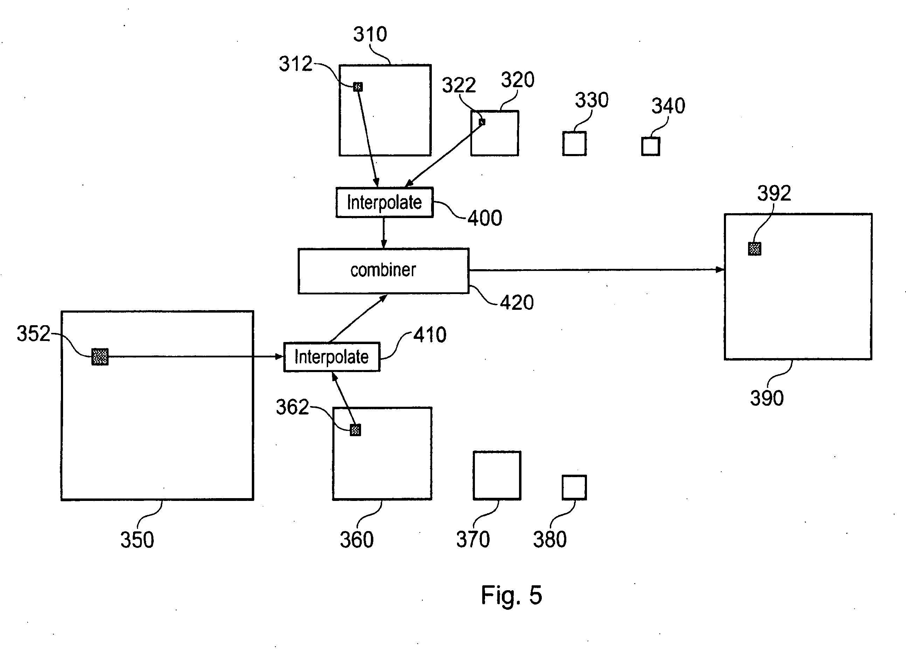

Figure 3 represented processing associated with previously proposed shaders using MIP map techniques. The processes relevant to the generation and use of MIP maps and shader techniques according to embodiments of the invention will now be described with reference to Figures 4 and 5.

Figure 4 schematically illustrates the generation of a MIP map according to embodiments of the present invention. These operations are generally not carried out by the graphics card 110 as they refer to the preparation of data rather than to the real-time display of images. Rather, these operations would normally be carried out by the CPU 50 under program control.

From a "base" texture map 300 (at, say, 256 x 256 pixels), a MIP map is generated using known techniques, and optionally including known anti-aliasing processing, to produce a series of smaller versions of the texture map 310, 320, 330, 340... As described with reference to Figure 3, the series can go down to a version at 1 x 1 pixel, but the smallest versions are not shown in Figure 4 simply for clarity of the drawing.

The texture maps are compressed (e.g. using DXT1 compression) and are then decompressed for the purposes of the processing below. For those of the texture maps which go forward for storage or transmission (all but the map 300 - see below) they are stored or transmitted in compressed form.

The base texture map 300 is ultimately discarded; that is to say, it is not used in the MIP map which is stored or transmitted, and later referred to by the shader 160. However, it is used in the preparation of the MIP map and so is shown in Figure 4 in broken line.

A series of "difference" texture maps is generated. These are shown as difference maps 350, 360, 370 and 380 in Figure 4. There is one difference map 350 corresponding to the size of the base texture map 300; and one for each lower texture map size except for the smallest texture map size.

The way in which the difference maps are generated will now be described. For each of the MIP map levels 310 ... 330, the CPU 50 decompresses the map. The CPU carries out program process steps 342, 344, 346 and 348 as follows:

(step 342) image-expand (i.e. scale) the next lower resolution image version by a factor of 4 (i.e. so as to be the same size as the current level);
(step 344) calculate (i.e. detect) the difference, on a pixel by pixel basis, between pixels of the current level and pixels of the image-expanded next lower level;
(step 346) multiply the difference by a gain factor (a scaling constant) and apply an offset (e.g. 128 = one half of the full range of pixel values); and
(step 348) use DXT1 or other compression to compress the difference image.

The gain factor might be, for example, 4 or 8 to improve the compression / decompression quality. This is possible because all of the difference values (before the offset is applied) will be reasonably close to zero. The offset is applied to handle negative difference values.

The image-expansion process may be a known bilinear filtering process.

DXT1 compression in a basic form provides a fixed 6:1 compression of 24 bit RGB colour data so that a 4 x 4 block of pixels (384 bits) is compressed to a 64 bit data quantity. Each pixel block is compressed by picking (using known techniques) a start and end colour at 565 precision (that is, 5 bits for red, 6 for green and 5 for blue) and considering up to two full-precision intermediate colours which may be defined as being evenly distributed (on a straight line in RGB colour space) between the start and end colours. Each pixel in the block is then encoded with a 2-bit index as a selection of a nearest one of these 4 colours. So the total number of bits used to encode the 4 x 4 pixel block is (16 pixels *2 bits per pixel) + (2 reference colours * (5+6+5) bits per reference colour) = 64 bits.

When the block of pixels is later decompressed, it is necessary just to detect the start and end colours, to interpolate two colours evenly distributed in colour space between the start and end colours, and then use those four colours in a look-up table with the 2 bit index provided for each pixel.

Referring to Figure 4, the generation of the difference image 360 is shown in schematic form. The texture map version 320 is image-expanded to the same size as the texture map version 310. The difference between the two is established and is scaled and offset as described above to generate the difference image 360, which is then subject to DXT1 compression. Corresponding techniques are used to generate the other difference images shown in Figure 4. It will be seen that the technique as described leads to the smallest difference image being one level (in the geometric series) larger than the smallest texture map.

It will be seen that the base texture map 300 is used in the generation of the difference image 350 but is not stored or transmitted for later use.

The texture map versions 310 ... 340 are also subjected to DXT1 compression.

All of the data generated in Figure 4 (preferably, apart from the highest resolution map 300 which is discarded as far as the present processing is concerned) may be transmitted via the network and/or stored on a storage medium such as an optical disk, in a compressed form.

Figure 5 schematically illustrates the interpolation of a required texture map value from a MIP map (comprising multiple compressed versions of an image such as a texture map and difference data depending upon image differences between a decompressed image version and a respective higher resolution image version) generated in accordance with Figure 4. These operations are carried out, generally in real time, by the shader 160.

In Figure 5, the texture map versions 310 ... 340 are provided, along with difference images 350 ... 380. Note that once again, for clarity of the drawing, the smallest few texture map versions and difference images are not shown. Note also that the base texture map 300 (Figure 4) has not been provided.

The basic process to generate a required texture map area 392 in an arbitrarily-sized required texture map scale 390 will now be described. In the present example, the required texture map scale is between the base size of 256 x 256 pixels and the next lower size of 128 x 128 pixels.

Two interpolation processes 400, 410 are carried out by the shader 160.

The interpolation process 400 decompresses and acts between regions 312 and 322 in two texture maps selected for this purpose by the shader 160: the texture map versions 310 (next lower from the required scale 390) and 320 (next lower again), to generate an interpolated pixel or region corresponding to the required region 392 but at one quarter of the required scale (i.e. one level down in the MIP map structure).

The interpolation process 410 decompresses and acts between regions 352, 362 in respective difference images 350, 360 at scales either side of the required scale 390. So, the interpolation of the difference data takes place using difference data at a next higher resolution than the resolutions used for the interpolation of the texture data.

The interpolation process 400 (i.e. the process which applies to the texture map versions 310 and 320 in the example of Figure 5) interpolates between the two texture map versions in such a way as to generate output pixels at the required output scale 390. So, it may be considered that the interpolation process 400 involves an upscaling with respect to the interpolation process 410 (though in fact both processes are simply arranged using the functionality of the shader so as to take two MIP versions as an input and to generate an output at the required scale 390).

The results of the two interpolation processes 400, 410 are passed to a combiner process 420, again implemented by the shader 160. The combiner process takes the two interpolated regions and combines them as follows:

divide difference image pixel value by the gain factor (see above) and subtract the offset; and
add the difference image pixel value and the corresponding pixel position in the interpolated texture map, to generate an output texture map at the required resolution

An example of this process running in a shader programming language, along with an explanation of each command, is as follows:

$$half3\ base = tex2Dbias\ (baseTex,\ in\_uv,\ bias\_amount)\ .\ xyz;$$

*half3* defines the type of the variable name which follows; so the variable *base* is a half precision three component (RGB) variable
*tex2Dbias* is a command to generate a pixel value from a MIP map at the currently required scale plus a bias MIP level, *bias_amount* (which in the above example would be 1, but could be a different number in other embodiments)
*baseTex* identifies the MIP map corresponding to the texture maps (in this example, the maps 310..340)
*in_uv* represent coordinates within a texture map
*.xyz* indicates that the first three components (RGB) of the argument should be passed as a result

So this command generates a required pixel using a texture map scale one lower (in the MIP chain) than would otherwise have been selected.

$$half3\ diff = tex2D\ (diffTex,\ in\_uv)\ .\ xyz;$$

*tex2D* is a command to generate a pixel value from a MIP map at the required scale (no offset)
*diffTex* identifies the MIP map corresponding to the difference images (i.e. the images 350...380 in the example)

$$half3\ combined = base + scale.xxx\ *\ (diff - offset.xxx);$$

*combined* is the output pixel value
*scale (representing 1/ gain factor)* and *offset* have been described earlier with reference to Figure 4
*.xxx* signifies a three component representation of the relevant variable

In a possible development, for smaller required scales, representing (generally) more distant objects on which less detail can be seen, the use of the difference map could be reduced or even avoided altogether and instead just a conventional interpolation between texture maps having scales either side of the required output scale could be used. So, for example, if the required output scale were smaller than a certain level, the conventional technique could be used whereas for required output scales larger than such a threshold, the difference based technique could be used. Or a weighted sum of the conventional and new techniques' results could be used, with the weighting generally increasing in favour of the new (difference image) technique with increasing required scale. These two possibilities may be combined - i.e. a weighted and thresholded system, with the weighting applying above a threshold scale. Of course, the conventional technique would not be applicable at required scales above the second MIP level, assuming the largest texture map version were discarded as described above.

The storage requirements of the MIP map generated using the technique shown in Figure 4 can be slightly higher than the storage requirements of a MIP map of Figure 3. In particular, the requirements can be about $1^2/_3$ of the size of the base map 200, 300. However, this small increase in storage can provide a greatly improved image quality.

In summary, the embodiments described above provide an image data compression / decompression technique which is particularly (though not exclusively) suited to real time use in CG applications and which can provide an improved output image quality for little increase in memory or processing overhead. In particular, for similar storage and processing requirements, visible noise can be reduced (by the use of this technique compared to previous techniques) in situations where low spatial frequency image information such as smooth lighting gradients is encoded.

The above embodiments can be implemented by the data processing apparatus of Figure 1 which, when operating under the control of appropriate software, provides means for carrying out the functional steps described above. In particular, it provides a data compressor, a data decompressor, a selector, a detector, a combiner, a generator etc, all usable in the above techniques. The resulting MIP map data produced by the process described in respect of Figure 4 may be transmitted via a network and/or may be stored on a storage medium, for example as part of or in connection with a computer game.

REFERENCES

1. http://oss.sgi.com/projects/ogl-sample/registry/EXT/texture_compression_s3tc.txt
2. US-A-5956431

**Claims**

1.  A method of image compression in which a plurality of versions (310, 320, 330, 340) of an image are compressed, each version having a different image resolution, the method comprising the steps of:

    for each version of the image other than the highest resolution version:

        decompressing that compressed version to generate decompressed image data;
        detecting (344) image differences between a higher resolution version (300, 310, 320, 330, 340) of the image and the decompressed image data; and
compressing (348) difference data (350, 360, 370, 380) dependent upon the detected image differences; and then storing and/or transmitting the compressed difference data and the plurality of compressed image versions, except for the highest resolution version (300).

2. A method according to claim 1, comprising the step, prior to the step of detecting image differences, of scaling (342) the decompressed image data to an image resolution equivalent to that of the respective higher resolution version of the image.

3. A method according to claim 1 or claim 2, in which:

the image versions are arranged as a set of versions having different respective image resolutions; and
the detecting step is arranged to detect image differences between the decompressed image data and an image version having a next higher resolution in the set of versions.

4. A method according to claim 3, in which the versions have respective image resolutions related by a logarithmic series so that, for a particular image version, the next higher resolution image version has a resolution which is a predetermined multiple of the resolution of that image version.

5. A method according to any one of the preceding claims, in which the difference data is dependent upon the detected image differences multiplied by a scaling constant.

6. A method of image decompression in which multiple compressed versions of an image are provided, each version having a different image resolution, along with compressed difference data dependent upon image differences between a decompressed image version and a respective higher resolution image version, the highest resolution image version used in the preparation of the difference data not being provided for processing by the image decompression method;
the method comprising the steps of:

selecting one or more image versions;
decompressing the compressed image data relating to the selected image version(s);
decompressing the difference data relating to respective higher resolutions than the selected image version(s); and
combining the decompressed image data and the decompressed difference data to generate an output image at a required output resolution.

7. A method according to claim 6, in which:

the image versions are arranged as a set of versions having different respective image resolutions; and
the difference data to be decompressed relates to respective next higher resolutions than the selected image version(s).

8. A method according to claim 7, in which the combining step is arranged to generate an output image based upon a weighted sum of a conventional interpolation and a difference-based interpolation, wherein the weighting is responsive to the required resolution of the output image.

9. A method according to claim 8 in which, for a predetermined lowest range of the required output resolution, the output image is independent of the difference data.

10. Computer software having program code which, when run on a data processing apparatus, causes the data processing apparatus to carry out a method according to any one of the preceding claims.

11. A medium by which software according to claim 10 is provided.

12. A medium according to claim 11, the medium being a storage medium.

13. A medium according to claim 11, the medium being a transmission medium.

**14.** Image compression apparatus in which a plurality of versions of an image are compressed, each version having a different image resolution, the apparatus being operable for each compressed version of the image other than the highest resolution version, to:

decompress that compressed version to generate decompressed image data;
detect image differences between a higher resolution version of the image and the decompressed image data; and
compress difference data dependent upon the detected image differences;
and then being operable to
store and/or transmit the compressed difference data and the plurality of compressed image versions except for the highest resolution version.

**15.** Image decompression apparatus in which multiple compressed versions of an image are provided, each version having a different image resolution, along with compressed difference data dependent upon image differences between a decompressed image version and a respective higher resolution image version, the highest resolution image version used in the preparation of the difference data not being provided to the image decompression apparatus;
the apparatus comprising:

a selector to select one or more image version(s);
a decompressor to decompress the compressed image data relating to the selected image version(s) and to decompress the difference data relating to respective higher resolutions than the selected image version(s); and
a combiner to combine the decompressed image data and the decompressed difference data to generate an output image at a required output resolution.

**Patentansprüche**

**1.** Verfahren zur Bildkompression, bei dem mehrere Versionen (310, 320, 330, 340) eines Bilds komprimiert werden, wobei jede Version eine unterschiedliche Bildauflösung hat, wobei das Verfahren die folgenden Schritte umfasst:

für jede Version des Bilds abgesehen von der höchsten Auflösungsversion:

Dekomprimieren dieser komprimierten Version, um dekomprimierte Bilddaten zu erzeugen;
Erfassen (344) von Bildunterschieden zwischen einer höheren Auflösungsversion (300, 310, 320, 330, 340) des Bilds und den dekomprimierten Bilddaten; und
Komprimieren (348) von Unterschiedsdaten (350, 360, 370, 380) in Abhängigkeit von den erfassten Bildunterschieden;
und dann Speichern und/oder Übertragen der komprimierten Differenzdaten und der mehreren komprimierten Bildversionen mit Ausnahme der höchsten Auflösungsversion (300).

**2.** Verfahren nach Anspruch 1, welches - vor dem Schritt zum Erfassen von Bildunterschieden - einen Schritt zum Skalieren (342) der komprimierten Bilddaten auf eine Bildauflösung gleich der der entsprechenden höheren Auflösungsversion des Bilds umfasst.

**3.** Verfahren nach Anspruch 1 oder 2, wobei:

die Bildversionen als ein Satz von Versionen eingerichtet sind, welche unterschiedliche entsprechende Bildauflösungen haben; und
der Erfassungsschritt eingerichtet ist, Bildunterschiede zwischen den dekomprimierten Bilddaten und einer Bildversion zu erfassen, welche eine nächst höhere Auflösung im Versionssatz hat.

**4.** Verfahren nach Anspruch 3, wobei die Versionen entsprechende Bildauflösungen bezogen auf eine logarithmische Serie haben, so dass - für eine bestimmte Bildversion - die nächst höhere Auflösungsbildversion eine Auflösung hat, welche ein vorher bestimmtes Vielfaches der Auflösung dieser Bildversion ist.

**5.** Verfahren nach einem der vorhergehenden Ansprüche, wobei die Unterschiedsdaten abhängig sind von den erfassten Bildunterschieden, multipliziert mit einer Skalierungskonstanten.

6. Verfahren zur Bilddekompression, bei dem mehrere komprimierte Versionen eines Bilds vorgesehen sind, wobei jede Version eine unterschiedliche Bildauflösung hat, gemeinsam mit den komprimierten Unterschiedsdaten in Abhängigkeit von Bildunterschieden zwischen einer dekomprimierten Bildversion und einer entsprechend höheren Auflösungsbildversion, wobei die höchste Auflösungsbildversion, welche bei Vorbereitung der Unterschiedsdaten verwendet wird, für die Verarbeitung durch das Bilddekompressionsverfahren nicht vorgesehen wird; wobei das Verfahren folgende Schritte umfasst:

Auswählen einer oder mehrerer Bildversionen;
Dekomprimieren der komprimierten Bilddaten in Bezug auf die ausgewählte Bildversion (Bildversionen);
Dekomprimieren der Unterschiedsdaten in Bezug auf die entsprechenden höheren Auflösungen als die ausgewählte Bildversion (Bildversionen); und
Kombinieren der dekomprimierten Bilddaten und der dekomprimierten Unterschiedsdaten, um ein Ausgangsbild mit einer geforderten Ausgangsauflösung zu erzeugen.

7. Verfahren nach Anspruch 6, wobei:

die Bildversionen als ein Satz an Versionen eingerichtet sind, welche unterschiedliche entsprechende Bildauflösungen haben; und
die zu dekomprimierenden Unterschiedsdaten sich auf entsprechende nächst höhere Auflösungen als die ausgewählte Bildversion (Bildversionen) beziehen.

8. Verfahren nach Anspruch 7, wobei der Kombinationsschritt eingerichtet ist, ein Ausgangsbild auf Basis einer Wichtungssumme einer herkömmlichen Interpolation und einer Interpolation auf Differenzbasis zu erzeugen, wobei das Wichten von der geforderten Auflösung des Ausgangsbilds abhängig ist.

9. Verfahren nach Anspruch 8, wobei - für einen vorher festgelegten untersten Bereich der geforderten Ausgangsauflösung - das Ausgangsbild unabhängig ist von den Unterschiedsdaten.

10. Computersoftware, welche einen Programmcode hat, die, wenn sie auf einer Datenverarbeitungsvorrichtung abläuft, veranlasst, dass die Datenverarbeitungsvorrichtung ein Verfahren nach einem der vorhergehenden Ansprüche ausführt.

11. Medium, durch welches Software nach Anspruch 10 bereitgestellt wird.

12. Medium nach Anspruch 11, wobei das Medium ein Speichermedium ist.

13. Medium nach Anspruch 11, wobei das Medium ein Übertragungsmedium ist.

14. Bildkompressionsvorrichtung, bei der mehrere Versionen eines Bilds komprimiert sind, wobei jede Version eine unterschiedliche Bildauflösung hat, wobei die Vorrichtung für jede komprimierte Version des Bilds abgesehen von der höchsten Auflösungsversion betreibbar ist, um:

diese komprimierte Version zu dekomprimieren, um dekomprimierte Bilddaten zu erzeugen;
Bildunterschiede zwischen einer höheren Auflösungsversion des Bilds und den dekomprimierten Bilddaten zu erfassen; und
Unterschiedsdaten in Abhängigkeit von den erfassten Bildunterschieden zu komprimieren;
und dann betreibbar ist, um
die komprimierten Unterschiedsdaten und die mehreren komprimierten Bildversionen mit Ausnahme für die höchste Auflösungsversion zu speichern und/oder zu übertragen.

15. Bilddekompressionsvorrichtung, bei der vielfach komprimierte Versionen eines Bilds vorgesehen sind, wobei jede Version eine unterschiedliche Bildauflösung hat, gemeinsam mit den komprimierten Differenzdaten in Abhängigkeit von Bildunterschieden zwischen einer dekomprimierten Bildversion und einer entsprechenden höheren Auflösungsbildversion, wobei die höchste Auflösungsbildversion, welche bei der Bereitstellung der Unterschiedsdaten verwendet wird, für die Bilddekompressionsvorrich.tung nicht vorgesehen ist; wobei die Vorrichtung umfasst:

ein Auswahleinrichtung, um eine oder mehrere Bildversion(en) auszuwählen;

einen Dekomprimierer, um die komprimierten Bilddaten in Bezug auf die ausgewählte Bildversion (Versionen) zu dekomprimieren, und um die Unterschiedsdaten in Bezug auf entsprechende höhere Auflösungen als die ausgewählte Bildversion (Versionen) zu dekomprimieren; und

eine Kombinationseinrichtung, um die dekomprimierten Bilddaten und die dekomprimierten Unterschiedsdaten zu kombinieren, um ein Ausgangsbild mit einer geforderten Ausgangsauflösung zu erzeugen.

**Revendications**

1. Procédé de compression d'image dans lequel une pluralité de versions (310, 320, 330, 340) d'une image sont compressées, chaque version ayant une résolution d'image différente, le procédé comprenant les étapes consistant à :

pour chaque version de l'image autre que la version de résolution la plus élevée :

décompresser cette version compressée pour générer des données d'image décompressées ;
détecter (344) des différences d'image entre une version de résolution supérieure (300, 310, 320, 330, 340) de l'image et les données d'image décompressées ; et
compresser (348) des données de différence (350, 360, 370, 380) en fonction des différences d'image détectées ;
et ensuite stocker et/ou transmettre les données de différence compressées et la pluralité de versions d'image compressées, à l'exception de la version de résolution la plus élevée (300).

2. Procédé selon la revendication 1, comprenant l'étape, avant l'étape de détection de différences d'image, consistant à changer l'échelle (342) des données d'image décompressées à une résolution d'image équivalente à celle de la version de résolution supérieure respective de l'image.

3. Procédé selon la revendication 1 ou la revendication 2, dans lequel :

les versions d'image sont agencées comme un ensemble de versions ayant des résolutions d'image respectives différentes ; et
l'étape de détection est agencée pour détecter des différences d'image entre les données d'image décompressées et une version d'image ayant une résolution supérieure suivante dans l'ensemble de versions.

4. Procédé selon la revendication 3, dans lequel les versions ont des résolutions d'image respectives liées par une série logarithmique de sorte que, pour une version d'image particulière, la version d'image de résolution supérieure suivante ait une résolution qui est un multiple prédéterminé de la résolution de cette version d'image.

5. Procédé selon l'une quelconque des revendications précédentes, dans lequel les données de différence dépendent des différences d'image détectées multipliées par une constante de changement d'échelle.

6. Procédé de décompression d'image dans lequel de multiples versions compressées d'une image sont fournies, chaque version ayant une résolution d'image différente, conjointement avec des données de différence compressées dépendant de différences d'image entre une version d'image décompressée et une version d'image de résolution supérieure respective, la version d'image de résolution la plus élevée utilisée dans la préparation des données de différence n'étant pas fournie pour le traitement par le procédé de décompression d'image ;
le procédé comprenant les étapes consistant à :

sélectionner une ou plusieurs versions d'image ;
décompresser les données d'image compressées relatives à la (aux) version(s) d'image sélectionnée(s) ;
décompresser les données de différence relatives à des résolutions supérieures respectives par rapport à la (aux) version(s) d'image sélectionnée(s) ; et
combiner les données d'image décompressées et les données de différence décompressées pour générer une image de sortie à une résolution de sortie requise.

7. Procédé selon la revendication 6, dans lequel :

les versions d'image sont agencées comme un ensemble de versions ayant des résolutions d'image respectives différentes ; et
les données de différence devant être décompressées concernent des résolutions supérieures suivantes respectives par rapport à la (aux) version(s) d'image sélectionnée(s).

8. Procédé selon la revendication 7, dans lequel l'étape de combinaison est agencée pour générer une image de sortie sur la base d'une somme pondérée d'une interpolation classique et d'une interpolation basée sur la différence, où la pondération est sensible à la résolution requise de l'image de sortie.

9. Procédé selon la revendication 8, dans lequel pour une plage la plus basse prédéterminée de la résolution de sortie requise, l'image de sortie est indépendante des données de différence.

10. Logiciel informatique ayant un code de programme qui, lorsqu'il est exécuté sur un appareil de traitement de données, amène l'appareil de traitement de données à effectuer un procédé selon l'une quelconque des revendications précédentes.

11. Support par lequel le logiciel selon la revendication 10 est fourni.

12. Support selon la revendication 11, le support étant un support de stockage.

13. Support selon la revendication 11, le support étant un support de transmission.

14. Appareil de compression d'image dans lequel une pluralité de versions d'une image sont compressées, chaque version ayant une résolution d'image différente, l'appareil étant exploitable pour chaque version compressée de l'image autre que la version de résolution la plus élevée, pour :

décompresser cette version compressée pour générer des données d'image décompressées ;
détecter des différences d'image entre une version de résolution supérieure de l'image et les données d'image décompressées ; et
compresser des données de différence en fonction des différences d'image détectées ;
et ensuite étant exploitable pour
stocker et/ou transmettre les données de différence compressées et la pluralité de versions d'image compressées à l'exception de la version de résolution la plus élevée.

15. Appareil de décompression d'image dans lequel de multiples versions compressées d'une image sont fournies, chaque version ayant une résolution d'image différente, conjointement avec des données de différence compressées dépendant de différences d'image entre une version d'image décompressée et une version d'image de résolution supérieure respective, la version d'image de résolution la plus élevée utilisée dans la préparation des données de différence n'étant pas fournie à l'appareil de décompression d'image ;
l'appareil comprenant :

un sélecteur pour sélectionner une ou plusieurs versions d'image ;
un décompresseur pour décompresser les données d'image compressées relatives à la (aux) version(s) d'image sélectionnée(s) et pour décompresser les données de différence relatives à des résolutions supérieures respectives par rapport à la (aux) version(s) d'image sélectionnée(s) ; et
un combineur pour combiner les données d'image décompressées et les données de différence décompressées pour générer une image de sortie à une résolution de sortie requise.

Fig. 1

Fig. 2

Fig. 3

300

310

320

330

340

image expand ─342

difference ─344

scale & offset ─346

compress ─348

350

360

370

380

Fig. 4

Fig. 5

EP 2 092 488 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2348334 A

- US 5956431 A

**Non-patent literature cited in the description**

- Survey of Progressive Image Transmission Methods. **Chee Y-K.** International Journal of Imaging Systems and Technology. Wiley and Sons, vol. 10